# EUROPEAN PATENT SPECIFICATION

(11) **EP 4 237 696 B1**
(45) Date of publication and mention of the grant of the patent: **16.09.2026**
(21) Application number: 21811605.1
(22) Date of filing: 27.10.2021
(51) Int. Cl.: F16B 37/04

(54) **CLIP AND NUT ASSEMBLY**
KLAMMER- UND MUTTERANORDNUNG
ENSEMBLE ÉCROU ET PINCE

(30) Priority: 30.10.2020 US 202063107694 P
(43) Date of publication of application: 06.09.2023
(73) Proprietor: DONALDSON COMPANY, INC., Minneapolis, MN 55440-1299 (US)
(72) Inventor: NELSON, Benny K., Bloomington, Minnesota 55431 (US)
(74) Representative: Oryon NV
(86) International application number: PCT/US2021/056813
(87) International publication number: WO 2022/093933

(56) References cited:
- DE-A1- 102009 024 532
- GB-A- 982 132
- KR-A- 20050 007 024
- US-A- 2 278 790
- US-A- 4 219 064
- US-B1- 6 688 825

## Description

### Technical Field

The present disclosure relates generally to a clip and fastener assembly used for securing a component to another component or structure, and more particularly relates to an assembly including a nut captured by a C-shaped clip that is attachable to a mounting bracket of a component to provide a simple and effective way of attaching that component to another component or structure, such as a vehicle or machine.

### Background

Fastener assemblies are frequently used to help secure a component, such as an air cleaner housing, to another component or structure, such as a vehicle or machine. When such an air cleaner housing is used for air filtration, the housing typically includes an opening into which a removable and replaceable air filter is held. The air cleaner housing can be made of plastic or another relatively lightweight material and can include mounting brackets along one or more of its outer surfaces. Rather than attaching the housing directly to another component, a fastener assembly can be affixed to each of the mounting brackets that are being utilized for a particular application, and a fastener (e.g., a bolt) of each fastener assembly can be used to secure the housing to the other component.

There is a desire to provide a fastener assembly that is easily attachable to a mounting bracket or feature of a housing, wherein such an attachment is preferably accomplished without the use of tools or tools unique to a specific assembly operation. For convenience and ease of assembly, it is further desired that such a fastener assembly includes a captive fastener, such as a nut. It is further desired that the fastener assembly minimizes plastic relaxation by distributing the clamp loads of the completed fastener assembly more uniformly across the mounting brackets or features.

In US6688825 B1 a fastener assembly is disclosed which includes a flexible resilient U-shaped retainer having first and second wall portions and a third wall portion interconnecting adjacent ends of the first and second wall portions such that the first wall portion overlies and is spaced from the second wall portion. The first wall portion of the retainer has a forward edge with laterally spaced tabs at opposed ends. The tabs extend toward the second wall portion and have flat ends spaced from the second wall portion of the retainer. A flange nut is mounted on the first wall portion of the retainer, and has a flange disposed within the first wall portion and spaced from the second wall portion.

### Summary

It is an object of the present disclosure to provide a clip and nut assembly according to claim 7, a component assembly comprising the clip and nut assembly according to claim 7, and a method for attaching an air cleaner housing to a structure by using the clip and nut assembly according to claim 7.

The present invention relates generally to clip and nut assemblies that are connected to a component and used to help distribute the loads that occur at bolted mounting connections and assist in secure attachment of that component to another component or structure. The clip and nut assemblies are provided with a "snap-fit" configuration that allows their attachment to mounting structures of a component (e.g., a plastic air cleaner housing having integrally molded mounting brackets or features) by simply pressing them onto a cooperating structure.

In accordance with embodiments described herein, a clip and nut assembly is provided that includes a generally C-shaped clip component having a lower plate with an upper surface, a retention tab extending from and curved over the lower plate so that a lower surface of the retention tab is facing and spaced from the upper surface of the lower plate, and a first aperture extending through the lower plate. The clip and nut assembly further includes a nut component including a first nut portion sized to fit within the first aperture and a second nut portion extending from the first nut portion.

The first aperture extending through the lower plate may include a hexagonal opening, and the first portion of the nut component may have an outer hexagonal shape. The retention tab may include a second aperture extending through it, which may be vertically aligned with the first aperture extending through the lower plate. The retention tab includes a distal end portion that is bent at least slightly upwardly from a proximal portion. In embodiments, the generally C-shaped clip component may be made of spring steel. The nut component may include a central threaded opening, and/or the second nut portion may include a head portion extending from the first nut portion.

In accordance with embodiments provided herein, a component assembly is provided that includes at least one mounting feature having a bottom wall, a first side wall extending from the bottom wall, a second side wall extending from the bottom wall and spaced from the first side wall, a mounting aperture extending through the bottom wall, and first and second generally horizontal channels extending along the first and second side walls, respectively. The component assembly further includes a clip and nut assembly corresponding to at least one of the mounting features, wherein the clip and nut assembly includes a generally C-shaped clip component with a lower plate having an upper surface, a retention tab curved over the lower plate so that a lower surface of the retention tab is facing and spaced from the upper surface of the lower plate, and a first aperture extending through the lower plate. The clip and nut assembly also includes a nut component having a first nut portion sized to fit within the first aperture and a second nut portion extending from the first portion. With this embodiment, the lower plate is positioned within the first and second horizontal channels of the at least one mounting bracket with the first aperture of the lower plate aligned with the mounting aperture of the at least one mounting feature.

In accordance with embodiments provided herein, a method of attaching an air cleaner housing to a structure is provided, wherein the air cleaner housing comprises at least one mounting feature. The method first includes a step of positioning a clip and nut assembly adjacent to the at least one mounting feature, wherein the clip and nut assembly includes a generally C-shaped clip component having a lower plate comprising an upper surface, a retention tab curved over the lower plate so that a lower surface of the retention tab is facing and spaced from the upper surface of the lower plate, and a first aperture extending through the lower plate. The clip and nut assembly further includes a nut component having a first nut portion positioned within the first aperture extending through the lower plate, a second nut portion extending from the first portion, and a central threaded opening extending through the first and second nut portions. The method further includes the steps of sliding the lower plate of the C-shaped clip component into first and second horizontal channels extending along first and second side walls of the at least one mounting feature, respectively, until the first aperture of the lower plate is aligned with a mounting aperture extending through a bottom wall of the at least one mounting bracket, positioning the mounting aperture of the at least one mounting bracket adjacent to an aperture extending through the structure, extending a fastener through the mounting aperture and the aperture extending through the structure, and threading the fastener into the central threaded opening of the nut component.

In accordance with embodiments provided herein a clip and nut fastener assembly is provided that includes first and second contact surfaces corresponding to first and second clamp load paths, respectively, wherein the first and second contact surfaces are spaced from each other relative to a fastening axis of the fastener assembly. The clip and nut fastener assembly includes a clip component with a lower plate comprising the first contact surface positionable adjacent to a top surface of a mounting feature of a component and a first aperture extending through the lower plate. The clip and nut fastener assembly further includes a nut component having a first nut portion sized to fit within the first aperture of the lower plate, wherein a bottom surface of the first nut portion comprises the second contact surface, and a head portion extending from the first nut portion. A fastener extends along the fastening axis through a structure to which the component is being attached, the mounting feature of a component being attached to the structure, the nut component, and the first aperture of the clip component, wherein the fastener comprises a fastener head. The first clamp load path extends along the fastening axis from the head portion of the nut component through the lower plate of the clip component, through the mounting feature of the component, through the structure to which the component is being attached, and to the fastener head, and the second clamp load path extends along the fastening axis from the first nut portion through the structure and to the fastener head.

### Brief Description of the Drawings

The present invention will be further explained with reference to the appended Figures, wherein like structure is referred to by like numerals throughout the several views, and wherein;
Figure 1 is a perspective view of an exemplary embodiment of a clip and nut assembly connected to an exemplary mounting bracket or feature;
Figure 2 is a bottom perspective view of the clip and nut assembly of Figure 1, connected to an exemplary mounting bracket or feature;
Figure 3 is a front view of the clip and nut assembly of Figure 1, connected to an exemplary mounting bracket or feature;
Figure 4 is a bottom view of the clip and nut assembly of Figure 1, connected to an exemplary mounting bracket or feature;
Figure 5 is a perspective view an exemplary embodiment of the clip portion of a clip and nut assembly;
Figure 6 is a top view of a flat piece of material of a clip portion prior to being formed into the clip portion configuration illustrated in Figure 5;
Figure 7 is a perspective view of an exemplary embodiment of a nut used for a clip and nut assembly;
Figure 8 is a side view of an exemplary embodiment of a clip and nut assembly;
Figure 9 is a perspective view of an exemplary mounting bracket to which a clip and nut assembly can be connected;
Figure 10 is a perspective view of a nut being pressed into a clip portion of a clip and nut assembly;
Figure 11 is a side view of a nut being pressed into a clip portion of a clip and nut assembly;
Figure 12 is a cross-sectional side view of an embodiment of a clip and nut assembly in a first position as it is being inserted into a mounting bracket;
Figure 13 is a cross-sectional side view of the clip and nut assembly of Figure 12 illustrating the nut raised, or pushed upward, and the clip portion in a slightly deflected state in preparation for insertion into the mounting bracket;
Figure 14 is a cross-sectional side view of the clip and nut assembly of Figures 11-13 that has been further inserted into the mounting bracket as compared to its position in Figure 13;
Figure 15 is a cross-sectional side view of the clip and nut assembly of Figures 11-14 that has been further inserted into the mounting bracket as compared to its position in Figure 14, which completes its assembly to a component, such as an air cleaner; and
Figure 16 is a perspective view of a bottom portion of two exemplary clip and nut assemblies as they are attached to mounting brackets of a component, wherein the component is attached to another component or structure through the use of bolts extending through the clip and nut assemblies.

### Detailed Description

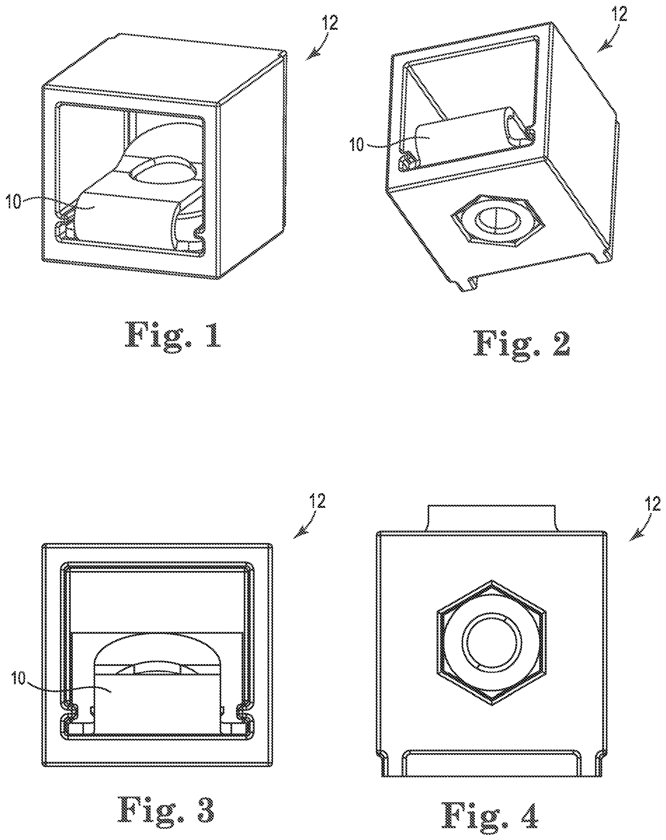

Referring now to the Figures, wherein the components are labeled with like numerals throughout the several Figures, and initially to Figures 1-4, an exemplary embodiment of a clip and nut assembly 10 is illustrated as connected to an exemplary mounting bracket or feature 12. Such a mounting bracket 12 can be associated with a component, such as an air cleaner, wherein such a component may include any number of such mounting brackets 12. In an embodiment, an air cleaner or other component may include multiple mounting brackets 12 located at various spaced positions that will be associated with attachment locations of another machine or secondary structure for attachment thereto, or the component may include only one of such mounting brackets 12. In a more particular embodiment, an injection molded air cleaner can be provided with multiple mounting brackets (e.g., twelve mounting brackets) and then fitted with only the clip and nut assemblies needed for the specific application (e.g., four spaced mounting locations with clip and nut assemblies). The configuration to be used can be decided upon and completed by the end user at the time of final assembly to a machine. This arrangement can require a fewer number of SKU's (or specific configurations) to be inventoried and managed by both the air cleaner manufacturer and the OEM user of the air cleaners.

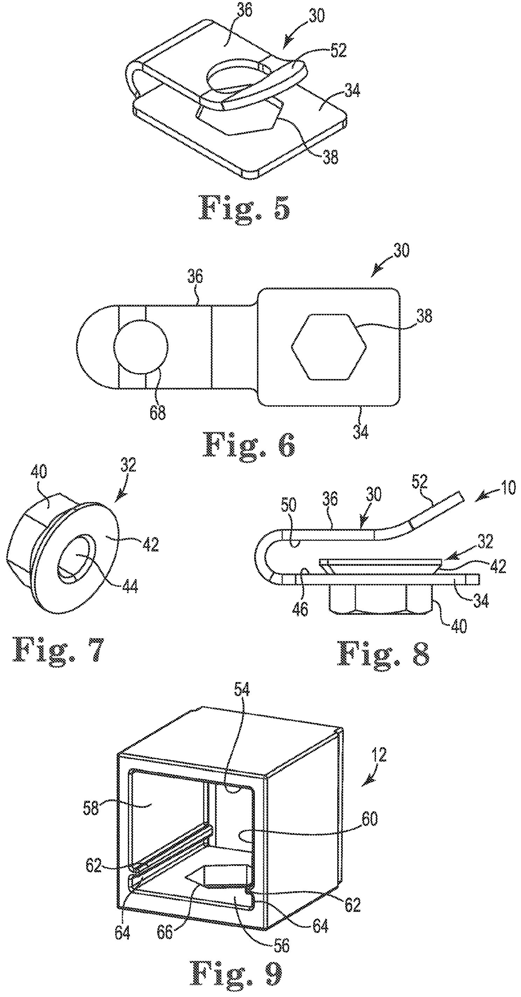

Referring also to Figures 5-8, the clip and nut assembly 10 generally includes a clip component 30 and a nut component 32. The clip component 30 is configured to accept a nut component 32 that includes a hex-shaped first portion 40 extending from a second or head portion 42, which may include a flange, a flange head, or the like, and may optionally have an angled or tapered configuration. While components of this exemplary embodiment for the head portion 42 of the nut component 32 are illustrated as generally circular and continuous in shape, it is understood that different shapes or configurations for the head portion 42 can be used. For example, the head portion 42 can be oval, rectangular, square, or the like. For another example, the head portion 42 can have a non-continuous or segmented configuration.

The nut component 32 further includes a central threaded opening 44. The nut component 32 may be a commercially available flange nut so that it is readily available in in multiple materials, strength grades, and finishes, as desired, or the nut component 32 can be particularly designed for specific applications. The threads of the central threaded opening 44 can be selected to accommodate a particular fastener, such as a bolt.

The clip component 30 generally includes a plate portion 34 from which a retention tab portion 36 extends. The plate portion 34 is shown as a generally rectangular planar member through which a hexagonal opening 38 extends. When assembled, the hex-shaped first portion 40 of the nut component 32 will fit into the hexagonal opening 38 with at least a portion of the head portion 42 extending above an upper surface 46 of the plate portion 34, as illustrated in Figure 8, for example. While components of this exemplary embodiment are illustrated as being hexagonal in shape, it is understood that a different shape or configuration for the first portion of the nut and/or the opening 38 can be provided that is a shape other than hexagonal, if desired, wherein the other openings in corresponding components and extending members would include a similar, mating shape. For one alternative shape, a 12-point flange nut and corresponding opening in the plate member can cooperate with each other in the manners described herein.

As is best illustrated in Figure 6, the retention tab portion 36 has a slightly smaller width than the adjacent plate portion 34, although it is contemplated that the tab portion 36 has the same width or a larger width than the adjacent plate portion 34. Figure 6 is a top view of a flat piece of material, such as spring steel, prior to being formed into the clip portion configuration described and illustrated relative to Figure 5 and other figures included herein. The flat piece of material of Figure 6 is formed into a C-shaped configuration in which the retention tab portion 36 curves over the plate portion 34. In this configuration, the retention tab portion 36 includes an inner surface 50 that is spaced from the upper surface 46 of plate portion 34.

The retention tab portion 36 is provided with a distal end portion 52 that is bent at least slightly upwardly from a proximal portion, wherein the distal end portion 52 can be used as a "lead-in" feature that allows the nut component 32 to be readily assembled within the clip component 30, as will be described below. The retention tab portion 36 can be used to hold the nut component 32 captive as a subassembly (as is shown with the clip and nut assembly 10 of Figure 8, for example) prior to its attachment to the mounting bracket 12 of a component. This clip and nut assembly 10 therefore allows for orientation of the clip and nut assembly 10 relative to its placement with its respective mounting bracket 12, as will be described below. In addition, the retention tab portion 36 serves as a spring to enable the nut component 32 to move a small increment, yet maintain tension, during assembly of the clip and nut assembly 10 into a mounting bracket 12.

The retention tab portion 36 further optionally includes an aperture 68 that is positioned so that it will be directly above the hexagonal opening 38 in the plate portion 34 when the clip component is configured as the C-shaped member illustrated in the figures. The aperture 68 can be sized so that a bolt or other connector extending through the nut component 32 can pass through the aperture 68 without interference.

Figure 9 illustrates an exemplary mounting bracket or feature 12 prior to the insertion of a clip and nut assembly 10. This mounting bracket 12 includes an optional top wall 54, a bottom wall 56, and first and second side walls 58, 60 extending between the top and bottom walls 54, 56. The side walls 58, 60 each include at least one support feature, which is illustrated as an elongated flange 62 extending from each of the side walls. These flanges 62 can extend along all or a part of the depth of the side walls 58, 60 and are provided as a cooperating pair that are generally horizontally disposed and spaced at the same vertical location along their respective side walls 58. 60. A channel 64 is defined by each of the flanges 62 and the bottom wall 56 of the bracket 12. In this way, an inserted clip and nut assembly 10 will be maintained with its plate portion 34 in the channel 64 in a horizontal orientation, which will generally be parallel to the top wall 54 and/or bottom wall 56. More than one pair of flanges can be provided at different locations along the height of the side walls 58, 60, if desired. The side walls 58, 60 can be provided with pairs of slots in addition to or instead of pairs of flanges, wherein these slots would similarly cooperate with an inserted clip and nut assembly 10.

The mounting bracket 12 illustrated herein is intended to be one exemplary configuration of such a bracket or feature, wherein it is understood that a wide variety of different configurations for such a bracket are possible. For example, the top walls of such mounting brackets are optional. Further, the side walls can be shorter or taller than illustrated, and do not necessarily have the same height as each other. That is, the height, width, depth, and other features of the mounting brackets can be similar or different than illustrated, and are designed to provide mounting locations for the component with which they are associated.

The bottom wall 56 of mounting bracket 12 includes an opening 66, which can be hexagonal-shaped, for example, that is positioned and oriented for engagement with the hex-shaped first portion 40 of nut component 32. That is, each of the six edges of the optionally hexagonal-shaped opening 66 of the bottom wall 56 are oriented to align with the six edges of the nut component 32 that is extending through the hexagonal opening 38 of the plate portion 34. As previously described, the hexagonal shape of the first portion of the nut component and the opening through the bottom wall of the plate portion is one exemplary shape, however, it is understood that the first portion of the nut component and the opening through the bottom wall of the plate portion can have different cooperating shapes.

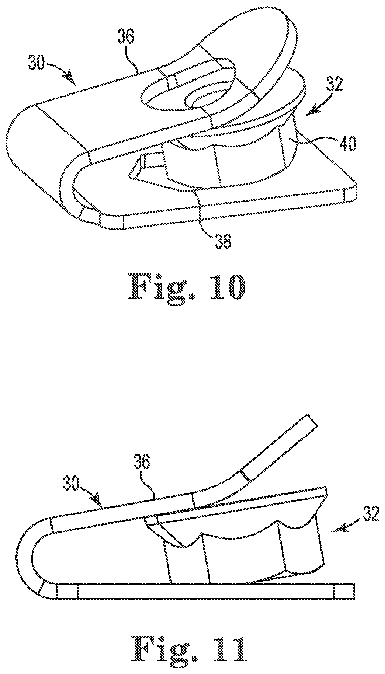

Figures 10 and 11 illustrate the preassembly of a clip and nut assembly 10 that occurs prior to attaching such an assembly to another component, such as a mounting bracket. The clip component 30 may be made of spring steel, for example, so that the clip component 30 is formed to its final shape, and then can flex by a small distance to enable the nut component 32 to slide into position. To do this, the nut component 32 is inserted into the C-shaped opening of the clip component 30 until the hex-shaped first portion 40 of nut component 32 falls into the hexagonal opening 38 of the plate portion 34. Such a movement of the nut component 32 will cause at least a slight deflection of the retention tab portion 36 of clip component 30 away from the plate portion 34. Because the head portion 42 of the nut component 32 of this exemplary embodiment is at least slightly larger than the outer dimensions of the hexagonal opening 38, the nut component 32 will be retained within the opening 38. Once the hex-shaped portion 40 of nut component 32 is positioned in the hexagonal opening 38, the retention tab portion 36 can flex or spring back to its original position. In this configuration, the nut component 32 is captured in the clip component 30 in such a way that it can move at least slightly within the C-shaped opening, but it preferably cannot be removed from the clip component without deflecting the retention tab portion 36 again.

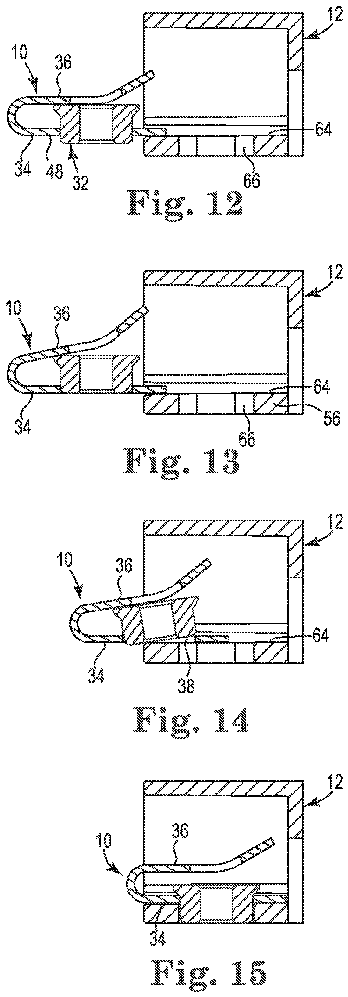

An exemplary series of steps for connecting a preassembled clip and nut assembly 10 to a mounting bracket 12 is illustrated in Figures 12-15. The clip and nut assembly 10 is positioned so that its plate portion 34 is parallel to the channels 64 of the mounting bracket 12 and its nut component 32 is extending beyond a bottom surface 48 of the plate portion 34, as shown in Figure 12. As the clip and nut assembly 10 is pushed into the mounting bracket 12, the nut component 32 will begin to be pushed upward so that it is no longer extending beyond the bottom surface 48 of the plate portion 34, as illustrated in Figure 13. As the nut portion 32 moves upward, it can at least slightly deflect the retention tab portion 36 upward.

The clip and nut assembly 10 will be further pushed into the channels 64 of the mounting bracket 12, as shown in Figure 14, which will cause the nut component 32 to tip at least slightly out of the hexagonal opening 38 of plate portion 34. This tipping of the nut component 32 will continue until the clip and nut assembly 10 is inserted into the mounting bracket 12 a sufficient distance that the nut component 32 is pushed by the spring force of the retention tab portion 36 into the optionally hexagonal opening 66 in the bottom wall 56 of the mounting bracket 12.

As described above, the spring feature of the retention tab portion 36 of the clip component 30 serves a dual purpose. First, the retention tab portion 36 undergoes a slight deflection and returns to its original shape when the nut component 32 is pushed into the clip component 30. Second, the retention tab portion 36 deflects and then returns to its original shape when the clip and nut assembly is pushed into a mounting bracket, such as the mounting bracket of an air cleaner housing.

After the desired number of clip and nut assemblies 10 have been attached to their respective mounting brackets 12, the associated component (e.g., air cleaner housing), can be positioned in its desired location on a component or structure (e.g., a machine) to which the component will be attached. At this point, the plate portion 34 will function as a wrench during assembly of a component to the machine to restrain the nut component 32 from turning. The plate portion 34 (which is generally rectangular, in this embodiment) provides a mechanical advantage to transfer local high assembly torque stresses at the surface of the nut component 32 to the area of the plate portion 34 that surrounds the opening 38. This mechanical advantage reduces the stresses from the assembly torque to a level that can be restrained by the body of the component and/or its mounting brackets 12 as constrained by the mating rectangular shape formed by the side walls.

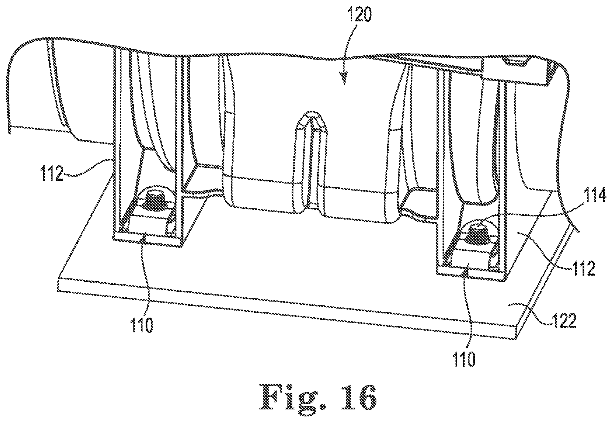

Figure 16 illustrates an exemplary use of two clip and nut assemblies 110 that are attached to mounting brackets 112 of a component 120, such as an air cleaner housing. The clip and nut assemblies 110 have been preassembled and then inserted into the mounting brackets 112 in the manner described above, for example. At this point, the central threaded opening of each nut component is positioned adjacent to an opening of a structure or machine 122 to which the component 120 is to be mounted. In this way, a fastener 114, such as a bolt, can be inserted into the central threaded opening of each nut and tightened a predetermined amount to secure the component 120 to the structure or machine 122. During this assembly process, there is no need for the installer to go behind the structure 122 or handle the part during the assembly operation. Once installed, the fastener is hidden, but the head of the bolt is visible, making this a serviceable joint.

With the configurations described herein, forces are distributed from the head portion 42 of the nut component 32 to the mounting bracket 12 of the corresponding component. The spring steel characteristics of the clip component 30 can provide a hardness property that is equivalent to the hardness of a washer component at the targeted property class of the nut component. The nut can be a Class 10, for example, but other classes can instead be used. The hardness of the clip component can be Rockwell C38 minimum, for example, although other hardness ranges can instead be used. When the component, such as an air cleaner assembly, is assembled to the machine, the clamping forces of the nut component 32 are distributed from the head portion 42 of the nut component 32 through the plate portion 34 of the clip component 30 and directed onto the surface of the mounting bracket 12. This is accomplished with material properties in the appropriate class for the desired fastener class (e.g., Class 10).

The plate portion 34 further functions as a washer to distribute clamp loads from the head portion 42 of the nut component 32 to a larger surface area of the mounting brackets 12 of the component 20. The redistribution of clamp loads enables a higher amount of stresses to be applied to a lower strength material of a mounting bracket 12, such as a plastic mounting bracket in the case of a plastic component (e.g., an air cleaner housing).

When the clip and nut assemblies described herein are assembled and attached to mounting brackets, the clamping force is divided and applied in two locations. First, bolting grip (or clamp) forces are applied from head portion 42 of the nut component 32 to the plate portion 34 of the clip component 30, which continues to the bottom wall 56 of a mounting bracket 12 to provide the restraint needed to secure the component (e.g. air cleaner housing) to a structure or machine 122. Second, a grip (or clamp) path occurs where the bottom of nut component 32 contacts the top of the structure or machine 122. A first grip path is generally softer or more flexible than a second grip path, wherein the first grip path is defined by the summation of: (1) the flex characteristics of the spring steel clip (comparatively characterized by 379212 kPa (55,000 psi) tensile strength), and (2) the relative compressible nature of a bottom wall 56 (comparatively characterized by 137895 kPa (20,000 psi) tensile strength when fabricated from plastic, for example). The second grip path is defined by the hardness of the nut 32 (comparatively characterized by 1034214 kPa (150,000 psi) tensile strength for a Class 10 fastener), and the structure or machine 122 (comparatively characterized by 413685 kPa (60,000 psi) tensile strength, when made of steel). The more rigid characteristic of this second grip path is desirable to accommodate the full rated torque applied in the bolted connection.

This staged (or sequential) clamping characteristic is accomplished through an exemplary dimensional relationship of the parts. For one example, the parts are sized such that there is a small gap (e.g., approximately 0.2 mm) in the second grip path between the nut and the machine 122 when the first grip path first makes contact. This enables the components of the first grip path to experience the following: (1) a slight compression of the plastic bottom wall 56, and (2) a slight local deflection of the plate portion 34 of the clip component 30 where it meets the angled flange of the nut component 32. This characteristic provides accommodation for the size tolerances in all of the mating components as this gap could range from approximately 0.0 mm to 0.4 mm for the size of this exemplary assembly. As the bolt continues to be tightened, the nut contacts the plate in the second grip path and the relative movement of the components is halted. As a final stage, the bolt can continue to be tightened to the full rated torque. In the relationship created between the torque and strength properties, the bolt can often experience a stretch when tightened to the full rated torque. This stretch experienced by the bolt is desirable as it provides the forces to maintain friction within the mating threads of the nut and bolt, which in turn prevent the bolt from loosening.

As compared to a U-nut on a component 20 such as an air cleaner, the nut component 32 of the clip and nut assemblies described herein will be flush with the mounting face of the component 20. This positions the nut component 32 directly in contact with the mounting surface of the machine, enabling the bolted connection to be completed with only rigid components (e.g., metal components, such as steel) in the grip, described previously as the second grip path.

The clip and nut assemblies 10 described herein can be fitted with a flange nut that has a metallurgy suited to withstand the assembly torque required for the application. As an example, a common torque requirement for a ISO Property Class 10, M8 fastener is 36.5 Newton-meters. This requirement can be met with the clip and nut assemblies 10. In contrast, a typical torque limitation for a U-Nut is 18 Newton-meters.

The present invention has now been described with reference to several embodiments thereof. The foregoing detailed description and examples have been given for clarity of understanding only. No unnecessary limitations are to be understood therefrom. It will be apparent to those skilled in the art that many changes can be made in the embodiments described without departing from the scope of the invention. Thus, the scope of the present invention should not be limited to the structures described herein, but only by the structures described by the language of the claims.

## Claims

1. A component assembly comprising:
at least one mounting feature (12) comprising a bottom wall (56), a first side wall (58) extending from the bottom wall (56), a second side wall (60) extending from the bottom wall (56) and spaced from the first side wall (58), a mounting aperture (66) extending through the bottom wall (56), and first and second generally horizontal channels (64) extending along the first and second side walls (58, 60) , respectively; and
a clip and nut assembly (10) according to any of claims 7 to 12, corresponding to at least one of the mounting features (12);
wherein the lower plate (34) is positioned within the first and second horizontal channels (64) of the at least one mounting feature (12) with the first aperture (38) of the lower plate (34) aligned with the mounting aperture (66) of the at least one mounting feature (12).

2. The component assembly of claim 1, wherein the first aperture (38) extending through the lower plate (34) comprises a hexagonal opening (38) and wherein the first portion (40) of the nut component comprises an outer hexagonal shape.

3. The component assembly of either of claims 1 and 2, further comprising a second aperture (68) extending through the retention tab (36) that is vertically aligned with the first aperture (38) extending through the lower plate (34).

4. The component assembly of any one of claims 1 to 3, wherein the generally C-shaped clip component (30) is made of spring steel such that it can deform when being pressed into the at least one mounting feature (12) and spring back to an undeformed configuration when positioned within the at least one mounting feature (12).

5. The component assembly of any one of claims 1 to 4, wherein the mounting aperture (66) of the at least one mounting feature (12) comprises a hexagonal opening.

6. A method of attaching an air cleaner housing to a structure (122), wherein the air cleaner housing comprises at least one mounting feature (12), the method comprising the steps of:
positioning a clip and nut assembly (10) according to any of claims 7 to 12 adjacent to the at least one mounting feature (12),
sliding the lower plate (34) of the C-shaped clip component (30) into first and second horizontal channels (64) extending along first and second side walls (58, 60) of the at least one mounting feature (12), respectively, until the first aperture (38) of the lower plate (34) is aligned with a mounting aperture (66) extending through a bottom wall (56) of the at least one mounting feature (12);
positioning the mounting aperture (66) of the at least one mounting feature (12) adjacent to a structure aperture extending through the structure (122);
extending a fastener (114) through the mounting aperture (66) and the structure aperture; and
threading the fastener (114) into a central threaded opening (44) of the nut component (32).

7. A clip and nut assembly (10) comprising:
a generally C-shaped clip component (30) comprising:
a lower plate (34) comprising an upper surface (46);
a retention tab (36) extending from and curved over the lower plate (34) so that a lower surface (50) of the retention tab (36) is facing and spaced from the upper surface (46) of the lower plate (34); and
a first aperture (38) extending through the lower plate (34);
a second aperture (68) extending through the retention tab (36), wherein the second aperture (68) extending through the retention tab (36) is vertically aligned with the first aperture (38) extending through the lower plate (34); and
a nut component (32) comprising:
a first nut portion (40) sized to fit within the first aperture (38); and
a second nut portion (42) extending from the first nut portion (40), **characterised in that** the retention tab (36) comprises a distal end portion (52) that is bent at least slightly upwardly from a proximal portion.

8. The clip and nut assembly (10) of claim 7, wherein the first aperture (38) extending through the lower plate (34) comprises a hexagonal opening.

9. The clip and nut assembly (10) of either of claims 7 and 8, wherein the first portion (40) of the nut component (32) comprises an outer hexagonal shape.

10. The clip and nut assembly (10) of any one of claims 7 to 9, wherein the generally C-shaped clip component (30) is made of spring steel.

11. The clip and nut assembly (10) of any one of claims 7 to 10, wherein the nut component (32) further comprises a central threaded opening (44).

12. The clip and nut assembly (10) of any one of claims 7 to 11, wherein the second nut portion (42) comprises a head portion extending from the first nut portion (40).

## Patentansprüche

1. Komponentenbaugruppe, die Folgendes umfasst:
mindestens ein Montagemerkmal (12), das eine untere Wand (56), eine erste Seitenwand (58), die sich von der unteren Wand (56) aus erstreckt, eine zweite Seitenwand (60), die sich von der unteren Wand (56) aus erstreckt und von der ersten Seitenwand (58) beabstandet ist, eine Montageöffnung (66), die sich durch die untere Wand (56) erstreckt, und einen ersten und einen zweiten im Allgemeinen horizontalen Kanal (64), die sich jeweils entlang der ersten beziehungsweise der zweiten Seitenwand (58, 60) erstrecken, umfasst, und
eine Klammer-Mutter-Baugruppe (10) nach einem der Ansprüche 7 bis 12, die mindestens einem der Montagemerkmale (12) entspricht,
wobei die untere Platte (34) innerhalb des ersten und des zweiten horizontalen Kanals (64) des mindestens einen Montagemerkmals (12) positioniert ist, wobei die erste Öffnung (38) der unteren Platte (34) mit der Montageöffnung (66) des mindestens einen Montagemerkmals (12) ausgerichtet ist.

2. Komponentenbaugruppe nach Anspruch 1, wobei die erste Öffnung (38), die sich durch die untere Platte (34) erstreckt, eine sechseckige Öffnung (38) umfasst und wobei der erste Abschnitt (40) der Mutternkomponente eine äußere sechseckige Form umfasst.

3. Komponentenbaugruppe nach einem der Ansprüche 1 und 2, die ferner eine zweite Öffnung (68), die sich durch die Haltelasche (36) erstreckt, umfasst, die in Vertikalrichtung mit der ersten Öffnung (38), die sich durch die untere Platte (34) erstreckt, ausgerichtet ist.

4. Komponentenbaugruppe nach einem der Ansprüche 1 bis 3, wobei die im Allgemeinen C-förmige Klammerkomponente (30) aus Federstahl hergestellt ist, so dass sie sich verformen kann, wenn sie in das mindestens eine Montagemerkmal (12) gepresst wird, und zu einer nicht verformten Konfiguration zurückfedern, wenn sie innerhalb des mindestens einen Montagemerkmals (12) positioniert wird.

5. Komponentenbaugruppe nach einem der Ansprüche 1 bis 4, wobei die Montageöffnung (66) des mindestens einen Montagemerkmals (12) eine sechseckige Öffnung umfasst.

6. Verfahren zum Befestigen eines Luftreinigergehäuses an einer Struktur (122), wobei das Luftreinigergehäuse mindestens ein Montagemerkmal (12) umfasst, wobei das Verfahren die folgenden Schritte umfasst:
Positionieren einer Klammer-Mutter-Baugruppe (10) nach einem der Ansprüche 7 bis 12 angrenzend an das mindestens eine Montagemerkmal (12),
Schieben der unteren Platte (34) der C-förmigen Klammerkomponente (30) in einen ersten und einen zweiten horizontalen Kanal (64), die sich jeweils entlang einer ersten beziehungsweise einer zweiten Seitenwand (58, 60) des mindestens einen Montagemerkmals (12) erstrecken, bis die erste Öffnung (38) der unteren Platte (34) mit einer Montageöffnung (66), die sich durch eine untere Wand (56) des mindestens einen Montagemerkmals (12) erstreckt, ausgerichtet ist,
Positionieren der Montageöffnung (66) des mindestens einen Montagemerkmals (12) angrenzend an eine Strukturöffnung, die sich durch die Struktur (122) erstreckt,
Ziehen eines Befestigungselements (114) durch die Montageöffnung (66) und die Strukturöffnung und
Schrauben des Befestigungselements (114) in eine mittige Gewindeöffnung (44) der Mutternkomponente (32).

7. Klammer-Mutter-Baugruppe (10), die Folgendes umfasst:
eine im Allgemeinen C-förmige Klammerkomponente (30), die Folgendes umfasst:
eine untere Platte (34), die eine obere Fläche (46) umfasst,
eine Haltelasche (36), die sich von der unteren Platte (34) aus erstreckt und über derselben gekrümmt ist, so dass eine untere Fläche (50) der Haltelasche (36) der oberen Fläche (46) der unteren Platte (34) gegenüberliegt und von derselben beabstandet ist, und
eine erste Öffnung (38), die sich durch die untere Platte (34) erstreckt,
eine zweite Öffnung (68), die sich durch die Haltelasche (36) erstreckt, wobei die zweite Öffnung (68), die sich durch die Haltelasche (36) erstreckt, in Vertikalrichtung mit der ersten Öffnung (38), die sich durch die untere Platte (34) erstreckt, ausgerichtet ist,
und
eine Mutternkomponente (32), die Folgendes umfasst:
einen ersten Mutternabschnitt (40), der dafür bemessen ist, in die erste Öffnung (38) zu passen, und
einen zweiten Mutternabschnitt (42), der sich von dem ersten Mutternabschnitt (40) aus erstreckt,
**dadurch gekennzeichnet, dass** die Haltelasche (36) einen distalen Endabschnitt (52) umfasst, der zumindest geringfügig von einem proximalen Abschnitt aus nach oben gebogen ist.

8. Klammer-Mutter-Baugruppe (10) nach Anspruch 7, wobei die erste Öffnung (38), die sich durch die untere Platte (34) erstreckt, eine sechseckige Öffnung umfasst.

9. Klammer-Mutter-Baugruppe (10) nach einem der Ansprüche 7 und 8, wobei der erste Abschnitt (40) der Mutternkomponente (32) eine äußere sechseckige Form umfasst.

10. Klammer-Mutter-Baugruppe (10) nach einem der Ansprüche 7 bis 9, wobei die im Allgemeinen C-förmige Klammerkomponente (30) aus Federstahl hergestellt ist.

11. Klammer-Mutter-Baugruppe (10) nach einem der Ansprüche 7 bis 10, wobei die Mutternkomponente (32) ferner eine mittige Gewindeöffnung (44) umfasst.

12. Klammer-Mutter-Baugruppe (10) nach einem der Ansprüche 7 bis 11, wobei der zweite Mutternabschnitt (42) einen Kopfabschnitt umfasst, der sich von dem ersten Mutternabschnitt (40) aus erstreckt.

## Revendications

1. Ensemble formant composant comprenant :
au moins un élément de montage (12) comprenant une paroi inférieure (56), une première paroi latérale (58) s'étendant à partir de la paroi inférieure (56), une seconde paroi latérale (60) s'étendant à partir de la paroi inférieure (56) et espacée de la première paroi latérale (58), une ouverture de montage (66) s'étendant à travers la paroi inférieure (56), et des premier et second canaux globalement horizontaux (64) s'étendant respectivement le long des première et seconde parois latérales (58, 60) ; et
un ensemble pince et écrou (10) selon l'une quelconque des revendications 7 à 12, correspondant à au moins un des éléments de montage (12) ;
dans lequel la plaque inférieure (34) est positionnée à l'intérieur des premier et second canaux horizontaux (64) de l'au moins un élément de montage (12), la première ouverture (38) de la plaque inférieure (34) étant alignée avec l'ouverture de montage (66) de l'au moins un élément de montage (12).

2. Ensemble formant composant selon la revendication 1, dans lequel la première ouverture (38) s'étendant à travers la plaque inférieure (34) comprend une ouverture hexagonale (38) et dans lequel la première portion (40) du composant écrou comprend une forme hexagonale extérieure.

3. Ensemble formant composant selon l'une ou l'autre des revendications 1 et 2, comprenant en outre une seconde ouverture (68) s'étendant à travers la languette de retenue (36) qui est alignée verticalement avec la première ouverture (38) s'étendant à travers la plaque inférieure (34).

4. Ensemble formant composant selon l'une quelconque des revendications 1 à 3, dans lequel le composant pince globalement en forme de C (30) est réalisé en acier à ressort de sorte qu'il puisse se déformer lorsqu'il est enfoncé dans l'au moins un élément de montage (12) et reprendre une configuration non déformée lorsqu'il est positionné à l'intérieur de l'au moins un élément de montage (12).

5. Ensemble formant composant selon l'une quelconque des revendications 1 à 4, dans lequel l'ouverture de montage (66) de l'au moins un élément de montage (12) comprend une ouverture hexagonale.

6. Procédé de fixation d'un logement de filtre à air sur une structure (122), dans lequel le logement de filtre à air comprend au moins un élément de montage (12), le procédé comprenant les étapes consistant à :
positionner un ensemble pince et écrou (10) selon l'une quelconque des revendications 7 à 12 de manière adjacente à l'au moins un élément de montage (12),
faire glisser la plaque inférieure (34) du composant pince en forme de C (30) dans des premier et second canaux horizontaux (64) s'étendant respectivement le long des première et seconde parois latérales (58, 60) de l'au moins un élément de montage (12), jusqu'à ce que la première ouverture (38) de la plaque inférieure (34) soit alignée avec une ouverture de montage (66) s'étendant à travers une paroi inférieure (56) de l'au moins un élément de montage (12) ;
positionner l'ouverture de montage (66) de l'au moins un élément de montage (12) de manière adjacente à une ouverture de structure s'étendant à travers la structure (122) ;
étendre un élément de fixation (114) à travers l'ouverture de montage (66) et l'ouverture de structure ; et
visser l'élément de fixation (114) dans une ouverture filetée centrale (44) du composant écrou (32).

7. Ensemble pince et écrou (10) comprenant :
un composant pince globalement en forme de C (30) comprenant :
une plaque inférieure (34) comprenant une surface supérieure (46) ;
une languette de retenue (36) s'étendant à partir de la plaque inférieure (34) et incurvée au-dessus de celle-ci de sorte qu'une surface inférieure (50) de la languette de retenue (36) soit en regard de la surface supérieure (46) de la plaque inférieure (34) et espacée de celle-ci ; et
une première ouverture (38) s'étendant à travers la plaque inférieure (34) ;
une seconde ouverture (68) s'étendant à travers la languette de retenue (36), dans laquelle la seconde ouverture (68) s'étendant à travers la languette de retenue (36) est alignée verticalement avec la première ouverture (38) s'étendant à travers la plaque inférieure (34) ;
et
un composant écrou (32) comprenant :
une première portion d'écrou (40) dimensionnée pour s'insérer à l'intérieur de la première ouverture (38) ; et
une seconde portion d'écrou (42) s'étendant à partir de la première portion d'écrou (40),
**caractérisé en ce que** la languette de retenue (36) comprend une portion d'extrémité distale (52) qui est repliée au moins légèrement vers le haut par rapport à une portion proximale.

8. Ensemble pince et écrou (10) selon la revendication 7, dans lequel la première ouverture (38) s'étendant à travers la plaque inférieure (34) comprend une ouverture hexagonale.

9. Ensemble pince et écrou (10) selon l'une ou l'autre des revendications 7 et 8, dans lequel la première portion (40) du composant écrou (32) comprend une forme hexagonale extérieure.

10. Ensemble pince et écrou (10) selon l'une quelconque des revendications 7 à 9, dans lequel le composant pince globalement en forme de C (30) est réalisé en acier à ressort.

11. Ensemble pince et écrou (10) selon l'une quelconque des revendications 7 à 10, dans lequel le composant écrou (32) comprend en outre une ouverture filetée centrale (44).

12. Ensemble pince et écrou (10) selon l'une quelconque des revendications 7 à 11, dans lequel la seconde portion d'écrou (42) comprend une portion de tête s'étendant à partir de la première portion d'écrou (40).
